(19) Europäisches Patentamt
European Patent Office
Office européen des brevets

(11) EP 1 136 512 A1

(12) **DEMANDE DE BREVET EUROPEEN**

(43) Date de publication:
**26.09.2001 Bulletin 2001/39**

(51) Int Cl.[7]: **C08G 69/44**, C08G 69/40

(21) Numéro de dépôt: **01400574.8**

(22) Date de dépôt: **06.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **24.03.2000 FR 0003796**

(71) Demandeur: **Atofina**
**92800 Puteaux (FR)**

(72) Inventeurs:
- **Hilgers, Hermann**
  **27170 Le Tilleul Othon (FR)**
- **Linemann, Reinhard**
  **27300 Bernay (FR)**

(74) Mandataire: **Neel, Henry et al**
**Atofina**
**D.C.R.D./D.P.I.**
**4, Cours Michelet**
**La Défense 10**
**92091 Paris La Défense Cedex (FR)**

(54) **Copolymères à blocs polyamides et blocs polyéthers à base d'amines éthoxylées**

(57) La présente invention concerne des copolymères à blocs polyamides et blocs polyéthers à base d'amines primaires éthoxylées, ces copolymères ayant une température de fusion comprise entre 80°C et 135°C et un MFI (Melt flow index ou indice de fluidité à l'état fondu) compris entre 5 et 80 g/ 10 min (2,16kg - 150°C).

Elle concerne aussi des adhésifs du type HMA (ou hot melt adhesives) constitués des copolymères à blocs polyamides et blocs polyéthers précédents.

EP 1 136 512 A1

## Description

[Domaine de l'invention]

La présente invention concerne plus particulièrement des copolymères à blocs polyamides et blocs polyéthers à base d'amines primaires éthoxylées, ces copolymères ayant une température de fusion comprise entre 80°C et 135°C. Les copolymères à blocs polyamides et blocs polyéthers proviennent généralement de la condensation de blocs polyamides à extremités acide carboxylique avec des polyethers diols. Les amines primaires éthoxylées constituent une classe particulière de polyethers diols.

Ces copolymères à blocs polyamides et blocs polyéthers sont utiles comme adhésifs du type HMA (ou hot melt adhesives), c'est-à-dire qu'on les dépose à l'état fondu sur les surfaces à coller puis l'adhésion est obtenue quand ils reviennent à l'état solide par refroidissement. Ces adhesifs sont utiles dans l'industrie textile.

[L'art antérieur]

Le brevet EP 281 461 décrit des copolymères à blocs polyamides et blocs polyéthers à base d'amines primaires éthoxylées. Les blocs polyamides sont soit en PA 6, soit en PA 6-6, soit en PA 11, soit en PA 12 et les températures de fusion sont entre 145°C et 202°C. La description mentionne que ces copolymères ont une bonne tenue à l'eau par comparaison avec des copolymères à blocs polyamides et blocs polyéthers mais dont les blocs polyethers sont en polyéthylène glycol (PEG). Aucune mention n'est faite de leur utilisation comme hot melt, seules sont décrites leurs propriétés mécaniques.

Le brevet WO 99/ 33659 décrit des copolymères à blocs polyamides et blocs polyéthers constitués de PEG, ces copolymères ayant une température de fusion de l'ordre de 110°C à 125°C. Les blocs polyamides sont constitués d'enchainements à base de diamines, de diacides et de lactames ou d'acides alpha- omega aminocarboxyliques. Ces copolymères peuvent être utilisés comme hot melts dans des structures imperrespirantes c'est à dire perméables à la vapeur d'eau mais imperméables à l'eau liquide.

Le brevet US 5,489,667 décrit des copolymères à blocs polyamides et blocs polyéthers constitués de PEG ou de PTMG (polytetramethylèneglycol) ces copolymères ayant une température de fusion de l'ordre de 110°C à 125°C. Ces copolymères peuvent être utilisés tels quels comme adhesifs hot melts ou d'abord extrudés en fibres se présentant sous forme d'un non-tissé puis ce non-tissé est ensuite disposé entre deux tissus qu'on veut coller entre eux, le collage est obtenu par chauffage et pressage. Les copolymères décrits dans cet art antérieur ont une bonne résistance au lavage avec les detergents en phase aqueuse mais resistent moins bien au repassage à chaud en particulier quand le repassage est fait à la vapeur.

[Le problème technique]

On a essayé d'utiliser les copolymères décrits dans le deuxième art antérieur pour coller des pièces de différents textiles constituant un vetement mais la résistance aux produits de nettoyage à sec ainsi qu'aux detergents usuels en solution aqueuse n'est pas parfaite. Les copolymères décrits dans le premier art antérieur ont une température de fusion trop élevée pour être utilisés comme hot melts dans l'industrie textile.

Ainsi il existe la necessité de mettre au point des produits ayant une température de fusion compatible avec l'utilisation comme hot melt, c'est à dire environ entre 80°C et 135°C. Ces produits devant aussi résister aux produits de nettoyage à sec ainsi qu'aux detergents usuels en solution aqueuse et au traitement par la vapeur pendant le repassage.

[Brève description de l'invention]

La présente invention concerne des copolymères à blocs polyamides et blocs polyéthers à base d'amines primaires éthoxylées, ces copolymères ayant une température de fusion comprise entre 80°C et 135°C et un MFI (Melt flow index ou indice de fluidité à l'état fondu) compris entre 5 et 80 g/ 10 min (2,16kg - 150°C). La température de fusion est mesurée par DSC (differential scanning calorimetry) ou selon DIN 53736, Teil B (visuelle Bestimmung der Schmelztemperatur von teilkristallinen Kunststoffen) optiquement à l'aide d'un banc chauffant et un microscope.

La présente invention concerne aussi des adhésifs du type HMA (ou hot melt adhesives) constitués des copolymères à blocs polyamides et blocs polyéthers précédents.

[Description détaillée de l'invention]

Les copolymères à blocs polyamides et blocs polyéthers résultent de la copolycondensation de séquences

polyamides à extrémités réactives avec des séquences polyéthers à extrémités réactives telles que des séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne.

La masse molaire en nombre $\overline{Mn}$ des séquences polyamides est comprise entre 300 et 15 000 et de préférence entre 600 et 5 000. La masse $\overline{Mn}$ des séquences polyéther est comprise entre 100 et 6 000 et de préférence entre 200 et 3 000.

Les copolymères à blocs polyamides et blocs polyéthers peuvent aussi comprendre des motifs répartis de façon aléatoire. Ces copolymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

**Selon une première forme de l'invention les séquences polyamides** résultent par exemple de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone et sont de faible masse c'est-à-dire $\overline{M}n$ de 400 à 1000 avantageusement de 400 à 800. A titre d'exemple d'acide alpha oméga aminocarboxylique on peut citer l'acide aminoundécanoïque et l'acide aminododécanoïque. A titre d'exemple d'acide dicarboxylique on peut citer l'acide adipique, l'acide sebacique,l'acide azelaïque l'acide isophtalique, l'acide butanedioïque, l'acide 1,4 cyclohexyldicarboxylique, l'acide térephtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque $HOOC-(CH_2)_{10}-COOH$.

A titre d'exemple de lactame on peut citer le caprolactame et le lauryllactame. On évitera le caprolactame à moins de purifier le polyamide du caprolactame monomère qui y reste dissous.

Des séquences polyamides obtenues par condensation du lauryllactame en présence d'acide adipique ou d'acide dodécanédioïque et de masse $\overline{M}n$ 750 ont une température de fusion de 127 - 130°C.

**Selon une deuxième forme de l'invention les séquences polyamides** résultent de la condensation d'au moins un acide alpha oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut.

La diamine peut être une diamine aliphatique ayant de 6 à 12 atomes, elle peut être arylique et/ou cyclique saturée.

A titre d'exemples on peut citer l'hexaméthylènediamine, la pipérazine, la tetraméthylène diamine, l'octaméthylène diamine, la decaméthylène diamine, la dodecaméthylène diamine, le 1,5 diaminohexane, le 2,2,4-triméthyl-1,6-diamino-hexane, les polyols diamine, l'isophorone diamine (IPD), la méthyl pentaméthylènediamine (MPDM), la bis(aminocyclohéxyl) méthane (BACM), la bis(3-méthyl-4 aminocyclohéxyl) méthane (BMACM).

Les différents constituants de la séquence polyamide et leur proportion sont choisis pour obtenir une température de fusion comprise entre 80°C et 135°C et avantageusement comprise entre 100°C et 130°C.

Des copolyamides à basse température de fusion sont decrits dans les brevets US 4 483 975, DE 3 730 504, US 5 459 230 on reprend les mêmes proportions des constituants pour les blocs polyamides de la deuxième forme de l'invention. Les blocs polyamides de la deuxième forme peuvent être aussi les blocs polyamides des copolymeres decrits dans US 5 489 667.

**A titre d'exemple d'amines primaires ethoxylées** on peut citer les produits de formule :

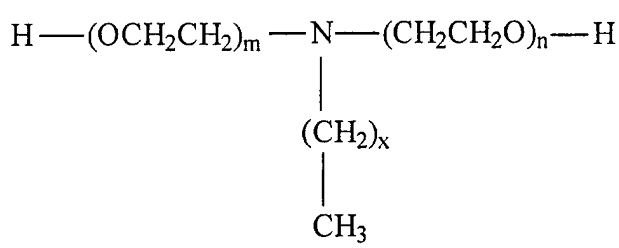

dans laquelle m et n sont compris entre 1 et 20 et x entre 8 et 18. Ces produits sont disponibles dans le commerce

sous la marque NORAMOX® de la société CECA et sous la marque GENAMIN® de la société CLARIANT.

Les blocs polyether peuvent representer 5 à 85 % en poids des copolymères de l'invention. On ne sortirait pas du cadre de l'invention si les copolymères contenaient, en plus des amines primaires étoxylées, d'autres blocs tels que des blocs PEG c'est à dire ceux constitués de motifs oxyde d'éthylène, des blocs PPG c'est à dire ceux constitués de motifs oxyde de propylène, des blocs PTMG c'est à dire ceux constitués de motifs tetraméthylène glycol appelés aussi polytetrahydrofurane et enfin des blocs obtenus par oxyethylation de bisphenols tels que par exemple le bisphenol A comme décrits dans le brevet EP 613 919. La quantité de blocs polyether est de preference de 10 à 50% en poids de (B).

Les copolymères de l'invention peuvent être préparés par tout moyen permettant d'accrocher les blocs polyamide et les blocs polyéther. **En pratique on utilise essentiellement deux procédés l'un dit en 2 étapes, l'autre en une étape.**

**Le procédé en 2 étapes consiste** d'abord à préparer les blocs polyamide à extrémités carboxyliques par condensation des précurseurs de polyamide en présence d'un diacide carboxylique limiteur de chaîne puis dans une deuxième étape à ajouter le polyéther et un catalyseur. Si les précurseurs de polyamide ne sont que des lactames ou des acides alpha oméga aminocarboxyliques, on ajoute un diacide carboxylique. Si les précurseurs comprennent déjà un diacide carboxylique on l'utilise en excédent par rapport à la stoechiométrie des diamines. La réaction se fait habituellement entre 180 et 300°C, de préférence 200 à 260°C la pression dans le réacteur s'établit entre 5 et 30 bars, on la maintient environ 2 heures. On réduit lentement la pression en mettant le réacteur à l'atmosphère puis on distille l'eau excédentaire par exemple une heure ou deux.

Le polyamide à extrémités acide carboxylique ayant été préparé on ajoute ensuite le polyéther et un catalyseur. On peut ajouter le polyéther en une ou plusieurs fois, de même pour le catalyseur. Selon une forme avantageuse on ajoute d'abord le polyéther, la réaction des extrémités OH du polyéther et des extrémités COOH du polyamide commence avec formations de liaison ester et élimination d'eau ; on élimine le plus possible l'eau du milieu réactionnel par distillation puis on introduit le catalyseur pour achever la liaison des blocs polyamide et des blocs polyéther. Cette deuxième étape s'effectue sous agitation de préférence sous un vide d'au moins 5 mm Hg (650 Pa) à une température telle que les réactifs et les copolymères obtenus soient à l'état fondu. A titre d'exemple cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible. Le catalyseur est défini comme étant tout produit permettant de faciliter la liaison des blocs polyamide et des blocs polyéther par estérification. Le catalyseur est avantageusement un dérivé d'un métal (M) choisi dans le groupe formé par le titane, le zirconium et le hafnium.

A titre d'exemple de dérivé on peut citer les tétraalcoxydes qui répondent à la formule générale $M(OR)_4$, dans laquelle M représente le titane, le zirconium ou le hafnium et les R, identiques ou différents, désignent des radicaux alcoyles, linéaires ou ramifiés, ayant de 1 à 24 atomes de carbone.

Les radicaux alcoyles en $C_1$ à $C_{24}$ parmi lesquels sont choisis les radicaux R des tétraalcoxydes utilisés comme catalyseurs dans le procédé suivant l'invention sont par exemple tels que méthyl, éthyl, propyl, isopropyl, butyl, éthylhexyl, décyl, dodécyl, hexadodécyl. Les catalyseurs préférés sont les tétraalcoxydes pour lesquels les radicaux R, identiques ou différents, sont des radicaux alcoyles en $C_1$ à $C_8$. Des exemples de tels catalyseurs sont notamment $Z_r(OC_2H_5)_4$, $Z_r(O\text{-}isoC_3H_7)_4$, $Z_r(OC_4H_9)_4$, $Z_r(OC_5H_{11})_4$, $Z_r(OC_6H_{13})_4$, $H_f(OC_2H_5)_4$, $H_f(OC_4H_9)_4$, $H_f(O\text{-}isoC_3H_7)_4$.

Le catalyseur utilisé dans ce procédé suivant l'invention peut consister uniquement en un ou plusieurs des tétraalcoxydes de formule $M(OR)_4$ définis précédemment. Il peut encore être formé par l'association d'un ou plusieurs de ces tétraalcoxydes avec un ou plusieurs alcoolates alcalins ou alcalino-terreux de formule $(R_1O)_pY$ dans laquelle $R_1$ désigne un reste hydrocarboné, avantageusement un reste alcoyle en $C_1$ à $C_{24}$, et de préférence en $C_1$ à $C_8$, Y représente un métal alcalin ou alcalino-terreux et p est la valence de Y. Les quantités d'alcoolate alcalin ou alcalino-terreux et de tétraalcoxydes de zirconium ou de hafnium que l'on associe pour constituer le catalyseur mixte peuvent varier dans de larges limites. On préfère toutefois utiliser des quantités d'alcoolate et de tétraalcoxydes telles que la proportion molaire d'alcoolate soit sensiblement égale à la proportion molaire de tétraalcoxyde.

La proportion pondérale de catalyseur, c'est-à-dire du ou des tétraalcoxydes lorsque le catalyseur ne renferme pas d'alcoolate alcalin ou alcalino-terreux ou bien de l'ensemble du ou des tétraalcoxydes et du ou des alcoolates alcalins ou alcalino-terreux lorsque le catalyseur est formé par l'association de ces deux types de composés, varie avantageusement de 0,01 à 5 % du poids du mélange du polyamide dicarboxylique avec le polyoxyalcoylène glycol, et se situe de préférence entre 0,05 et 2 % de ce poids.

A titre d'exemple d'autres dérivés on peut citer aussi les sels du métal (M) en particulier les sels de (M) et d'un acide organique et les sels complexes entre l'oxyde de (M) et/ou l'hydroxyde de (M) et un acide organique. Avantageusement l'acide organique peut être l'acide formique, l'acide acétique, l'acide propionique, l'acide butyrique, l'acide valérique, l'acide caproïque, l'acide caprylique, l'acide lauryque, l'acide myristique, l'acide palmitique, l'acide stéarique, l'acide oléique, l'acide linolique, l'acide linolénique, l'acide cyclohexane carboxylique, l'acide phénylacétique, l'acide

benzoïque, l'acide salicylique, l'acide oxalique, l'acide malonique, l'acide succinique, l'acide glutarique, l'acide adipique, l'acide maléique, l'acide fumarique, l'acide phtalique et l'acide crotonique. Les acides acétique et propionique sont particulièrement préférés. Avantageusement M est le zirconium. Ces sels peuvent s'appeler sels de zirconyle. La demanderesse sans être liée par cette explication pense que ces sels de zirconium et d'un acide organique ou les sels complexes cités plus haut libèrent $ZrO^{++}$ au cours du procédé. On utilise le produit vendu sous le nom d'acétate de zirconyle. La quantité à utiliser est la même que pour les dérivés $M(OR)_4$.

Ce procécé et ces catalyseurs sont décrits dans les brevets US 4,332,920, US 4,230,838, US 4,331,786, US 4,252,920, JP 07145368A, JP 06287547A, et EP 613919.

**S'agissant du procédé en une étape** on mélange tous les réactifs utilisés dans le procédé en deux étapes c'est-à-dire les précurseurs de polyamide, le diacide carboxylique limiteur de chaîne, le polyéther et le catalyseur. Il s'agit des mêmes réactifs et du même catalyseur que dans le procédé en deux étapes décrit plus haut. Si les précurseurs de polyamide ne sont que des lactames il est avantageux d'ajouter un peu d'eau.

Le copolymère a essentiellement les mêmes blocs polyéthers, les mêmes blocs polyamides, mais aussi une faible partie des différents réactifs ayant réagi de façon aléatoire qui sont répartis de façon statistique le long de la chaîne polymère.

On ferme et on chauffe le réacteur sous agitation comme dans la première étape du procédé en deux étapes décrit plus haut. La pression s'établit entre 5 et 30 bars. Quand elle n'évolue plus on met le réacteur sous pression réduite tout en maintenant une agitation vigoureuse des réactifs fondus. La réaction est suivie comme précédemment pour le procédé en deux étapes.

Le catalyseur utilisé dans le procédé en une étape est de préférence un sel du métal (M) et d'un acide organique ou un sel complexe entre l'oxyde de (M) et/ou l'hydroxyde de (M) et un acide organique.

Le MFI des copolymères de l'invention est réglé par la quantité du limiteur de chaîne ou l'excès hors stoechiométrie d'un diacide utilisé pour la synthèse, plus cette quantité est importante et plus le MFI est faible. L'homme de metier peut ajuster facilement cette quantité à partir des observations faites sur le couple d'agitation du reacteur de synthèse.

A titre d'exemple de copolymères on peut citer les produits suivants:

<u>6 /6-6 /6-9 /6-12 /MPMD-9 /FAOET-12</u> dans laquelle
6 est le caprolactame,
6-6 est l'hexaméthylène adipamide,
6-9 est l'hexaméthylène azélamide
6-12 est l'hexaméthylène dodecanamide ,
MPMD-9 est le methylpentamethylène azélamide
FAOET est l'amine primaire éthoxylée et 12 est le limiteur de chaine (diacide en C12) du bloc polyamide, la proportion du limiteur peut être de 5 à 20 moles pour 100 moles de l'ensemble polyether limiteur.

Les proportions sont respectivement en poids:

18 à 22 /12 à 15 /6 à 8 /12 à 15 /18 à 22 /28 à 32 le total étant 100.
<u>6 /6-12 /11 /FAOET-12</u> dans laquelle
6 est le caprolactame,
6-12 est l'hexaméthylène dodecanamide,
11 est l'amino acide en C11,
FAOET est l'amine primaire éthoxylée et 12 est le limiteur de chaine (diacide en C12) du bloc polyamide, la proportion du limiteur peut être de 5 à 20 moles pour 100 moles de l'ensemble polyether limiteur.

Les proportions sont respectivement en poids:

20 à 25 /22 à 27 /20 à 25 /28 à 32 le total étant 100.
<u>6 /11 /6-6 /FAOET-6</u> dans laquelle
6 est le caprolactame,
11 est l'amino acide en C11,
6-6 est l'hexaméthylène adipamide,
FAOET est l'amine primaire éthoxylée et 6 est le limiteur de chaine (acide adipique) du bloc polyamide, la proportion du limiteur peut être de 5 à 20 moles pour 100 moles de l'ensemble polyether limiteur.

Les proportions sont respectivement en poids:

28 à 35 /32 à 45 /15 à 18 /5 à 25 le total étant 100.

D'autres produits sont cités dans les exemples.

Les compositions selon l'invention peuvent renfermer en outre au moins un additif choisi parmi :

- les charges (minérales, anti-feu...),
- les fibres
- les sels inorganiques et/ou organiques et/ou de polyélectrolyte
- les colorants ;
- les pigments ;
- les azurants ;
- les anti-oxydants ;
- les stabilisateurs UV.

[Exemples]

Exemple comparatif

Préparation du copolymère 6/11/6-12/PEG-12 en proportion massique 21/24,5/24,5/30.

Les monomères suivants sont introduits dans un autoclave qui est équipé d'un agitateur: 2450g de caprolactame, 2450g d'acide aminoundecanoïque, 704,2 g d'hexaméthylènediamine et 2188,4 g d'acide dodecandioïque .

Le mélange ainsi formé est mis sous atmoshère inerte et chauffé jusqu'à ce que la température atteigne 260°C en maintenant une agitation vigoureuse dès la fusion des réactifs. Pendant 1 heure on maintient 260°C et 14 bars de pression (précondensation). Ensuite on diminue la pression (pendant 1/2 h) de 14 bars à la pression atmosphérique on maintient la température à 260°C. Ensuite on introduit 2187,4 g de polyoxyéthylène dihydroxylé (PEG Mn = 600) et 40g de di-n-butyl zirconate.

Le produit obtenu est mis sous pression réduite de ca. 30 mbar. La réaction est poursuivie pendant une durée de 1 h. Le produit est extrudé dans un bain d'eau et granulé.

Le produit sous forme des granulés a été broyé cryogeniquement dans un broyeur à froid classique. La poudre ainsi obtenue a été séparée en plusieurs fractions de granulométries différentes à l'aide des tamis classiques. La fraction 80 à 200 µm a été testée. Les résultats sont décrits dans le tableau No. 1

Exemple 1

Préparation du copolymère 6/11/6-12/PEG-12/NORAMOXS2-12 en proportion massique 21/24,5/24,5/15/15. NORAMOX®S2 désigne le produit de la formule citée dans la description dans laquelle m+n=2, il est aussi appelé le N,N-bis(2 hydroxyéthyl) suif amine et est vendu par la société CECA.

Les monomères suivants sont introduits dans un autoclave qui est équipé d'un agitateur: 2520g de caprolactame, 2940g d'acide aminoundecanoïque, 985,9 g d'hexaméthylènediamine et 2441,7 g d'acide dodecandioïque.

Le mélange ainsi formé est mis sous atmoshère inerte et chauffé jusqu'à ce que la température atteigne 250°C en maintenant une agitation vigoureuse dès la fusion des réactifs. Pendant 1 heure on maintient 250°C et 20 bars de pression (précondensation). Ensuite on diminue la pression (pendant 1 h) de 20 bars à la pression atmosphérique on maintient la température à 250°C. Ensuite on introduit 1312,4 g de polyoxyéthylène dihydroxylé (PEG Mn = 600), 1085,8 g NORAMOX S2 et 48g de di-n-butyl zirconate.

Le mélange obtenu est mis sous pression réduite de ca. 30 mbar. La réaction est poursuivie pendant une durée de 1 h. Le produit est extrudé dans un bain d'eau et granulé.

Comme dans l'exemple comparatif le produit sous forme des granulés a été broyé cryogeniquement dans un broyeur à froid classique. La poudre ainsi obtenue a été séparée en plusieurs fractions de granulométrie différente à l'aide des tamis classiques. La fraction 80 à 200 µm a été testée. Les résultats sont décrits dans le tableau No. 1

Exemple 2

Préparation du copolymère 6/11/6-12/PEG-12/NORAMOXS2-12 en proportion massique 21/24,5/24,5/7,5/22,5.

Les monomères suivants sont introduits dans un autoclave qui est équipé d'un agitateur: 2520g de caprolactame, 2940g d'acide aminoundecanoïque, 985,9 g d'hexaméthylènediamine et 2441,7 g d'acide dodecandioïque .

Le mélange ainsi formé est mis sous atmoshère inerte et chauffé jusqu'à ce que la température atteigne 250°C an maintenant une agitation vigoureuse dès la fusion des réactifs. Pendant 1 heure on maintient 250°C et 20 bars de pression (précondensation). Ensuite on diminue la pression (pendant 1 h) de 20 bars à la pression atmosphérique on maintient la température à 250°C. Maintenant on introduit 656,2 g de polyoxyéthylène dihydroxylé (PEG Mn = 600), 1628,7 g NORAMOX S2 et 48g de di-n-butyl zirconate.

Le mélange obtenu est mis sous pression réduite de ca. 30 mbar. La réaction est poursuivie pendant une durée de 1 h. Le produit est extrudé dans un bain d'eau et granulé.

Comme dans l'exemple comparatif le produit sous forme des granulés a été broyé cryogeniquement dans un broyeur à froid classique. La poudre ainsi obtenue a été séparée en plusieurs fractions de granulométrie différente à l'aide des tamis classiques. La fraction 80 à 200 µm a été testée. Les résultats sont décrits dans le tableau No. 1

Les copolymères selon les exemples ci-dessus ont été appliqués par impression sur un non-tissé en coton à l'aide d'une installation d'impression à point de poudre selon les techniques habituelles dans l'industrie de revêtement des textiles. En utilisant un pochoir d'impression de 17 mesh on dépose environ 15 g de copolymère par $m^2$ du non tissé en coton.

Les non-tissés ainsi revêtus ont été collés sur un tissus qui se compose à 45% de laine et 55% de polyester, le collage est effectué par pressage entre des plaques chaudes pendant 15 secondes et sous une force de pressage correspondant à 350 mbar. La température des plaques de la presse est ajustée à différentes valeurs comprises entre 120°C et 160°C. On realise ainsi une serie de laminés (non tissé en coton enduit de copolymère collé par pressage sur le tissus laine/polyester) produits à différentes températures de pressage puis on les découpe en échantillons d'une largeur de 5 cm. Sur ces échantillons on mesure la résistance à l'arrachement en N/5cm selon la norme DIN 54 310. Les mesures sont effectuées sur 3 series de laminés : ceux qui viennent d'être fabriqués et ne subissent pas de traitement, ceux qui ont subit 3 lavages à 40°C et enfin ceux qui ont subit 3 nettoyages à sec. On a mesuré aussi la résistance des laminés à la vapeur, on leur applique pendant 10 min la vapeur d'une presse ou d'un fer à vapeur et on mesure ensuite la résistance à l'arrachement en g/ 5cm à l'aide d'un dynamometre. La viscosité relative en solution est mesurée à 0,5% dans le m-cresol à 20°C au viscosimetre Ostwald.

Tableau No. 1

| Produit | Exemple comparatif | Exemple 1 selon invention | Exemple 2 selon invention |
|---|---|---|---|
| Composition<br>(en % masse) | 6: 21<br>11: 24,5<br>6.12: 24,5<br>PEG.12: 30 | 6; 21<br>11: 24,5<br>6.12: 24,5<br>PEG.12: 15<br>NOR.12: 15 | 6: 21<br>11: 24,5<br>6.12: 24,5<br>PEG.12: 7,5<br>NOR.12: 22,5 |
| Tf/°C | 116-123 | 115-120 | 110-120 |
| viscosité relative en solution | 1,63 | 1,49 | 1,37 |
| $MFI_{150°C}$/ g/ 10min | 15,0 | 7,2 | 15,8 |
| Température de pressage | résistance à l'arrachement du laminé non traité | | |
| 120°C<br>130°C<br>140°C<br>150°C<br>160°C | 6,0<br>7,5<br>9,0<br>10,5<br>12,0 | 6,0<br>7,5<br>8,5<br>9,5<br>11,0 | 8,0<br>11,0<br>12,5<br>12,5<br>15,0 |
| Température de pressage | résistance à l'arrachement du laminé après 3 lavages à 40°C | | |
| 120°C<br>130°C<br>140°C<br>150°C<br>160°C | 3,5<br>4,0<br>4,0<br>7,0<br>8,0 | 4,5<br>5,0<br>6,0<br>6,0<br>9,0 | 5,0<br>7,5<br>9,0<br>10,0<br>11,0 |
| Température de pressage | résistance à l'arrachement du laminé après 3 nettoyages à sec | | |
| 120°C<br>130°C<br>140°C<br>150°C<br>160°C | 4,0<br>4,5<br>6,0<br>7,0<br>8,0 | 4,0<br>6,0<br>7,5<br>7,0<br>9,0 | 6,0<br>7,5<br>9,0<br>10,0<br>13,5 |

Tableau No. 1 (suite)

| Produit | Exemple comparatif | Exemple 1 selon invention | Exemple 2 selon invention |
|---|---|---|---|
| résistance à la vapeur chaude en g/5cm | 50-350 | 400-600 | 300-550 |

**Revendications**

1. Copolymères à blocs polyamides et blocs polyéthers à base d'amines primaires éthoxylées, ces copolymères ayant une température de fusion comprise entre 80°C et 135°C et un MFI (Melt flow index ou indice de fluidité à l'état fondu) compris entre 5 et 80 g/ 10 min (2,16kg - 150°C).

2. Copolymères selon la revendication 1 dans lesquels les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone et sont de faible masse c'est-à-dire $\overline{M}n$ de 400 à 800.

3. Copolymères selon la revendication 1 dans lesquels les blocs polyamides résultent de la condensation d'au moins un acide alpha oméga aminocarboxylique (ou un lactame), au moins une diamine et au moins un diacide carboxylique.

4. Copolymères selon l'une quelconque des revendications précédentes ayant une température de fusion comprise entre 100°C et 130°C.

5. Copolymères selon l'une quelconque des revendications précédentes dans lesquels les amines primaires éthoxylées sont des produits de formule

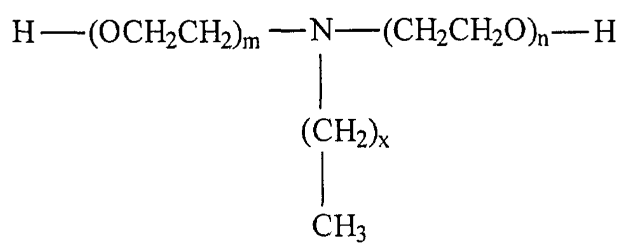

dans laquelle m et n sont compris entre 1 et 20 et x entre 8 et 18.

6. Copolymères selon l'une quelconque des revendications précédentes dans lesquels les blocs polyether représentent 5 à 85% en poids.

7. Copolymères selon l'une quelconque des revendications précédentes dans lesquels les blocs polyether représentent 10 à 50% en poids.

8. Adhesifs du type HMA (ou hot melt adhesives) constitués des copolymères à blocs polyamides et blocs polyéthers selon l'une quelconque des revendications précédentes.

Office européen des brevets

# RAPPORT DE RECHERCHE EUROPEENNE

Numéro de la demande
EP 01 40 0574

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X<br>Y | EP 0 281 461 A (ATOCHEM ELF SA)<br>7 septembre 1988 (1988-09-07)<br>* page 3, ligne 24 - ligne 25; revendications * | 1-7<br>8 | C08G69/44<br>C08G69/40 |
| D,Y | WO 99 33659 A (ELF ATOCHEM ET AL.)<br>8 juillet 1999 (1999-07-08)<br>* page 2, ligne 5 - page 10, ligne 30; revendication 12 * | 8 | |
| Y,D | US 5 459 230 A (E. DE JONG ET AL)<br>17 octobre 1995 (1995-10-17)<br>* revendications * | 8 | |

DOMAINES TECHNIQUES RECHERCHES (Int.Cl.7)

C08G

Le présent rapport a été établi pour toutes les revendications

| Lieu de la recherche | Date d'achèvement de la recherche | Examinateur |
|---|---|---|
| BERLIN | 11 juin 2001 | Boeker, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 01 40 0574

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-06-2001

| Document brevet cité au rapport de recherche | Date de publication | Membre(s) de la famille de brevet(s) | Date de publication |
|---|---|---|---|
| EP 0281461 A | 07-09-1988 | FR 2611727 A | 09-09-1988 |
| | | AT 88486 T | 15-05-1993 |
| | | CA 1311079 A | 01-12-1992 |
| | | DE 3880352 A | 27-05-1993 |
| | | DE 3880352 T | 30-09-1993 |
| | | DK 97988 A | 27-08-1988 |
| | | ES 2054838 T | 16-08-1994 |
| | | FI 880893 A | 27-08-1988 |
| | | JP 63227626 A | 21-09-1988 |
| | | KR 9305139 B | 16-06-1993 |
| | | NO 880147 A,B, | 29-08-1988 |
| | | US 4839441 A | 13-06-1989 |
| WO 9933659 A | 08-07-1999 | AU 1882599 A | 19-07-1999 |
| | | CN 1248199 T | 22-03-2000 |
| | | EP 0961686 A | 08-12-1999 |
| US 5459230 A | 17-10-1995 | DE 4318047 A | 01-12-1994 |
| | | DE 59408871 D | 09-12-1999 |
| | | EP 0627454 A | 07-12-1994 |
| | | JP 7011227 A | 13-01-1995 |
| | | KR 242495 B | 01-02-2000 |

EPO FORM P0460

Pour tout renseignement concernant cette annexe : voir Journal Officiel de l'Office européen des brevets, No.12/82